# NEUE EUROPÄISCHE PATENTSCHRIFT

(11) **EP 1 533 212 B2**
(45) Veröffentlichungstag und Bekanntmachung des Hinweises auf die Entscheidung über den Einspruch: **12.08.2009**
(45) Hinweis auf die Patenterteilung: 27.12.2006
(21) Anmeldenummer: 04022899.1
(22) Anmeldetag: 25.09.2004
(51) Int. Cl.: B62D 15/02

(54) **Lenkwinkelsensor**
Steering angle sensor
Capteur d'angle de direction

(30) Priorität: 20.11.2003 DE 10354343
(43) Veröffentlichungstag der Anmeldung: 25.05.2005
(73) Patentinhaber: Valeo Schalter und Sensoren GmbH, 74319 Bietigheim-Bissingen (DE)
(72) Erfinder: Suchanek, Jürgen, 74363 Güglingen (DE); Klementis, Otto, Dr., 8200 Veszprem (HU)
(74) Vertreter: Dreiss

(56) Entgegenhaltungen:
- EP-A- 1 069 025
- EP-A- 1 219 527
- EP-A- 1 324 003
- DE-A1- 19 601 964
- DE-C1- 19 841 960
- DE-U1- 29 703 892

## Beschreibung

Die Erfindung betrifft einen Lenkwinkelsensor zur Bestimmung der Drehstellung eines Lenkrades eines Fahrzeuges, mit einem mit einem Lenkrad direkt oder indirekt drehgekoppelten Rotor und mit einer Sensorik zur Erfassung der Drehstellung des Rotors. An dem Rotor kann hierbei ein Codeelement oder eine Codescheibe angeordnet sein beziehungsweise der Rotor kann ein Codeelement oder eine Codescheibe umfassen.

Ein derartiger Lenkwinkelsensor ist beispielsweise aus der EP 1 219 527 A1 bekannt geworden. Dabei ist innerhalb eines Gehäuses eine Leiterplatte vorgesehen, auf der verschiedene mechanische und elektrische Bauteile angeordnet sind. An dem Gehäuse ist außerdem eine Codescheibe sowie ein Schaltrad drehbar gelagert angeordnet.

Ein Lenkwinkelsensor nach dem Oberbegriff des Anspruchs 1 ist aus EP 1 069 025 A2 bekannt.

Der vorliegenden Erfindung liegt die Aufgabe zugrunde, die Genauigkeit und Präzision der Bestimmung des Lenkwinkels zu erhöhen. Außerdem soll ein kompakt bauender und eine geringe Anzahl von Teile aufweisender Lenkwinkelsensor bereit gestellt werden.

Diese Aufgabe wird gelöst mit einem Lenkwinkelsensor der eingangs beschriebenen Art, der sich dadurch auszeichnet, dass der Rotor an einer Leiterplatte drehbar gelagert ist und dass elektrische und/oder mechanische Bauteile der Sensorik unmittelbar auf der Leiterplatte angeordnet sind. Im Gegensatz zum bekannten Stand der Technik erfolgt die Lagerung des Rotors nicht an einem Gehäuse, sondern an der Leiterplatte. Dadurch kann eine weitaus präzisere und weitaus geringere Toleranzen aufweisende Anordnung des Rotors beziehungsweise eines am Rotor vorgesehenen Codeelements gegenüber der Leiterplatte, beziehungsweise der auf der Leiterplatte angeordneten Sensorik, eingehalten werden. Die Zwischenschaltung des Gehäuses zwischen der Sensorik beziehungsweise der Leiterplatte und dem Rotor beziehungsweise dessen Codeelements entfällt.

Bei dem erfindungsgemäßen Lenkwinkelsensor kann eine ungenaue Messung nicht dadurch auftreten, dass äußere Kräfte auf das Gehäuse des Lenkwinkelsensors wirken. Beim Stand der Technik wirkt sich eine auf das Gehäuse wirkende Kraft auf die Lage der Leiterplatte gegenüber dem Rotor beziehungsweise dessen Codeelement negativ aus. Ein Lenkwinkelsensor gemäß dem Stand der Technik ist folglich störanfälliger als ein Lenkwinkelsensor gemäß der Erfindung.

Vorteilhafterweise kann erfindungsgemäß vorgesehen sein, dass zur drehbaren Lagerung an der Leiterplatte ein Lagerelement angeordnet ist, das mit einem rotorseitigen Gegenlager zusammenwirkt. Das Lagerelement kann beispielsweise als Lagerring ausgebildet sein, der form-, kraft- oder stoffschlüssig mit der Leiterplatte verbindbar ist. Als insbesondere vorteilhaft hat sich herausgestellt, das Lagerelement mit der Leiterplatte zu verrasten und/oder zu verkleben. Erfindungsgemäß wird der Rotor nicht an dem Gehäuse des Lenkwinkelsensors, sondern ausschließlich an der Leiterplatte drehbar angeordnet.

Dabei ist denkbar, dass die Leiterplatte Aussparungen zur drehsicheren und/oder positionsgenauen Anordnung des Lagerelements aufweist. Hierdurch kann beispielsweise gewährleistet werden, dass das Lagerelement lediglich in einer vorgegebenen Sollposition mit der Leiterplatte gefügt wird.

Der Rotor kann beispielsweise ein Codierelement in Form einer Codescheibe aufweisen, auf der ein ein- oder mehrspuriger Code vorhanden ist. Bei dem Code handelt es sich vorteilhafterweise um einen optischen Code. Allerdings kann erfindungsgemäß auch vorgesehen sein, dass das Codeelement einen magnetischen Code aufweist, der über entsprechende Magnetfeldsensoren abtastbar ist.

Eine weitere Ausgestaltung der Erfindung sieht vor, dass die Leiterplatte derart dimensioniert ist, dass sie Kräfte, die auf sie wirken, aufnehmen und ableiten kann. Leiterplatten sind in der Regel aus einem vergleichsweise stabilen Material, da eine unerwünschte Verformung der Leiterplatte zu Rissen an den auf oder in der Leiterplatte vorhandenen Leiterbahnen führen kann. Demnach ist eine Leiterplatte geeignet, die Funktion eines Gehäuses wenigstens teilweise zu erfüllen.

Die Sensorik zur Abtastung des Codeelements kann einen Opto-Sensor umfassen, wobei auf der Leiterplatte Lichtsende- und/oder Lichtempfängerelemente des Opto-Sensors angeordnet sind. Dabei benötigt der Opto-Sensor keine eigene Leiterplatte.

Der Opto-Sensor kann vorteilhafterweise einen Lichtleiter' umfassen, der ebenfalls auf der Leiterplatte angeordnet ist. Der Lichtleiter leitet die vom Lichtsendebeziehungsweise -empfängerelement ausgesendeten beziehungsweise empfangenen Signale an entsprechende fotoelektrische Bauteile.

Erfindungsgemäß kann auch vorgesehen sein, dass die Sensorik wenigstens einen Magnetfeldsensor umfasst, der auf der Leiterplatte angeordnet ist. Der Magnetfeldsensor benötigt hierbei keine eigene Leiterplatte. Auch hierdurch kann eine Bauteilreduzierung erreicht werden.

Die Sensorik kann außerdem eine Auswerteeinheit beinhalten, die aus den erfassten Daten den jeweiligen Lenkwinkel bestimmt. Dabei sind die Bauteile der Auswerteeinheit wenigstens weitgehend unmittelbar auf der Leiterplatte angeordnet. Auch hierdurch können Bauteile und Leitverbindungen eingespart werden.

Im Übrigen können weitere elektrische und/mechanische Bauteile auf der Leiterplatte angeordnet sein.

Die Leiterplatte mit der Sensorik und dem Codeelement ist vorteilhafterweise als eigene Baugruppe vormontierbar, separat handhabbar und kann separat auf Funktionsfähigkeit des Lenkwinkelsensors geprüft werden. Die entsprechende Baugruppe kann bei der Endmontage entsprechend mit weiteren Bauteilen, beispielsweise mit einem Gehäuse, an dem Lenkrad, beziehungsweise an der Lenksäule, angeordnet werden.

Dabei ist denkbar, dass an der Leiterplatte ein von dem Codeelement unmittelbar oder mittelbar angetriebener, drehbarer Drehkörper entsprechend gelagert angeordnet ist. Der Drehkörper kann wiederum mit entsprechenden Abtasteinheiten abgetastet werden; die Ausgangssignale dieser Abtasteinheit können zur präziseren Bestimmung des Lenkwinkels innerhalb einer Lenkwinkelumdrehung oder zur Bestimmung des Lenkwinkels über mehrere volle Umdrehungen hinweg Verwendung finden.

Vorteilhafterweise kann das Lagerelement einen Ausleger mit einer Lageraufnahme zur drehbaren Lagerung des mit dem Rotor drehgekoppelten Drehkörpers aufweisen. Dadurch, dass das Lagerelement zum einen zur Lagerung des Rotors und zum anderen zur Lagerung des Rades dient, können die Toleranzen sehr gering gehalten werden. Hierdurch kann die Bestimmung des Lenkwinkels präzisiert werden beziehungsweise kann eine höhere Auflösung erzielt werden.

Anstelle der Anordnung des Drehkörpers an der Lageraufnahme ist erfindungsgemäß denkbar, dass das Rad an der Leiterplatte drehbar gelagert angeordnet ist.

Eine vorteilhafte Ausführungsform der Erfindung ergibt sich dann, wenn die Leiterplatte von einem entsprechenden Gehäuse umgeben ist. Das Gehäuse schützt insbesondere die auf der Leiterplatte angeordneten Bauteile vor störenden Umwelteinflüssen.

Weitere Vorteile und Einzelheiten der Erfindung sind der nachfolgenden Beschreibung zu entnehmen, in der die Erfindung anhand des in der Zeichnung dargestellten Ausführungsbeispiels näher beschrieben und erläutert ist.

Es zeigen:

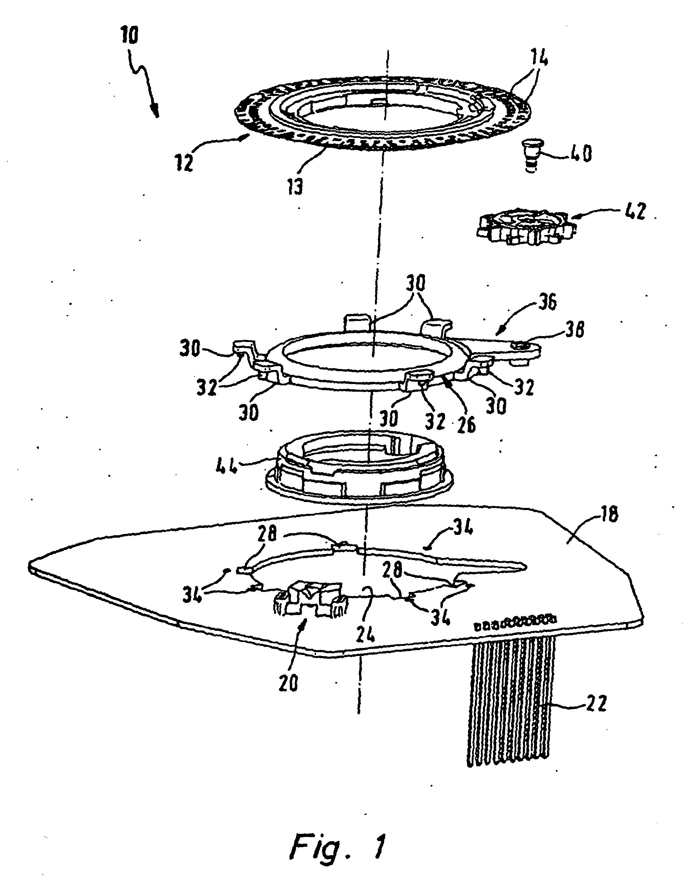

- Figur 1: einen erfindungsgemäßen Lenkwinkelsensor in Explosionsdarstellung;
- Figur 2: den erfindungsgemäßen Lenkwinkelsensor gemäß Figur 1 in montiertem Zustand.

Der in den Figuren gezeigte Lenkwinkelsensor 10 umfasst einen mit einem nicht dargestellten Lenkrad direkt oder indirekt verbundenen drehkoppelbaren Rotor 12 mit einem Codeelement 13 in Form einer Codescheibe. Das Codeelement 13 weist zur Bestimmung des Drehwinkels zwei Codespuren 14 auf, die konzentrisch um die angedeutete Drehachse 16 des Rotors 12, beziehungsweise des Codeelements 13, verlaufen. Die Achse 16 ist deckungsgleich mit der Drehachse eines nicht dargestellten Lenkrades beziehungsweise mit der Achse der Lenksäule des Fahrzeugs. Die nicht dargestellte Lenksäule verläuft in der endmontierten Position des Lenkwinkelsensors durch einen zentralen Durchbruch 24 in der Leiterplatte 18.

Ferner sieht der Lenkwinkelsensor 10 eine Leiterplatte 18 vor, der eine Sensorik in Form eines Opto-Sensors 20 zur Abtastung der Codespuren 14 des Codeelements 13 angeordnet ist. Der Opto-Sensor 20 umfasst nicht näher dargestellte Sende- und/oder Empfängerelemente sowie einen zugehörigen Lichtleiter. Die Sende- und/oder Empfängerelemente sind dabei unmittelbar auf der Leiterplatte 18 angeordnet. Entsprechend ist der Lichtleiter auf der Leiterplatte 18 angeordnet. An der Leiterplatte 18 sind außerdem Verbindungsleitungen 22 vorgesehen, die die Leiterplatte mit einem entsprechenden Steuer- und/oder Regelgerät verbinden.

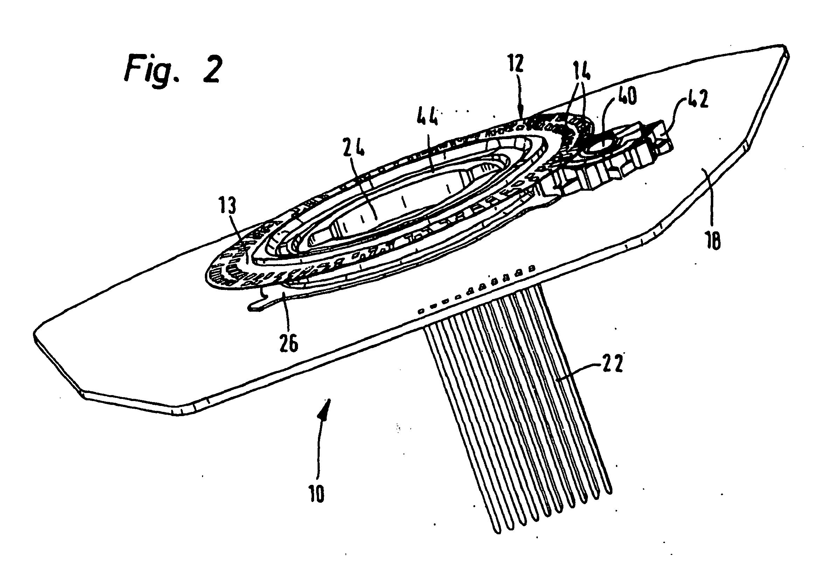

Der Rotor 12 ist an der Leiterplatte 18 gemäß Figur 2 drehbar angeordnet, wobei in der Figur der Opto-Sensor 20 nicht dargestellt ist. Die drehbare Lagerung erfolgt ausschließlich über ein an der Leiterplatte 18 angeordnetes Lagerelement 26, das vorteilhafterweise mit der Leiterplatte 18 verrastbar und/oder mit der Leiterplatte 18 verklebbar ist. Zur eindeutigen und positionsgenauen Anordnung des Lagerelements 26 an der Leiterplatte 18 sind an der Leiterplatte 18 entsprechende Aussparungen 28 vorgesehen, in die entsprechende Lagerabschnitte 30 des Lagerelements 26 einführbar sind. Die Lagerabschnitte 30 sehen an ihren freien Enden in Richtung der Leiterplatte 18 ragende Positionierzapfen 32 vor, die im endmontierten Zustand in entsprechende Positionierlöcher 34 eingreifen.

Das Lagerelement 26 umfasst außerdem einen Ausleger 36, an dessen freien Ende eine Lageraufnahme 38 für einen Lagerzapfen 40 vorgesehen ist. Der Lagerzapfen 40 dient zur drehbaren Lagerung eines Drehkörpers in Form eines Rades 42 in der Lageraufnahme 38. Das Rad 42 steht in der Endmontagelage im Eingriff mit dem Rotor 12. Das Rad 42 ist insbesondere Teil eines Zählwerks, mit dem die vollen Umdrehungen des Rotors 12 beziehungsweise des nicht dargestellten Lenkrades gezählt werden können. Das Rad 42 kann allerdings auch dazu dienen, um die Winkelauflösung mit der der Lenkwinkel über die Codespuren 14 und die zugehörige Sensorik bestimmt wird, zu erhöhen.

Die Drehstellung des Rades 42 wird über nicht dargestellte, vorteilhafterweise ebenfalls auf der Leiterplatte 18 angeordnete Abtastelemente bestimmt.

Dadurch, dass sowohl der Rotor 12 als auch das Rad 42 an ein und demselben Bauteil, nämlich dem Lagerelement 26 angeordnet sind, und dass das Lagerelement 26 ausschließlich an der Leiterplatte 18 befestigt ist, kann eine sehr hohe Präzision in der Abtastung zum einen des Codeelements 13 und zum anderen des Rades 42 gewährleistet werden. Aufgrund der erzielbaren sehr geringen Toleranzen kann die Auflösung des Lenkwinkelsensors erhöht werden.

Die Leiterplatte 18 ist insbesondere aus einem relativ stabilen Material, das auf die Leiterplatte 18 wirkende Kräfte aufnehmen und ableiten kann.

Zur sicheren und genauen drehbaren Lagerung des Rotors 12 an dem Lagerelement 26 beziehungsweise an der Leiterplatte 18 ist ein Gegenlagerring 44 vorgesehen. Zur Montage des Rotors 12 an der Leiterplatte 18 wird der Rotor 12 von der einen Seite und der Gegenlagerring 44 von der anderen Seite auf das Lagerelement 26 aufgeschoben. Bei Erreichen der Endmontagelage verrastet vorteilhafterweise der Rotor 12 mit dem Gegenlagerring 44.

Um die Leiterplatte 18 kann erfindungsgemäß ein Gehäuse zum Schutz der auf der Leiterplatte 18 angeordneten Bauteile vorgesehen sein.

## Patentansprüche

1. Lenkwinkelsensor (10) zur Bestimmung der Drehstellung eines Lenkrades eines Fahrzeuges, mit einem mit einem Lenkrad direkt oder indirekt drehgekoppelten Rotor (12) und mit einer Sensorik (20) zur Erfassung der Drehstellung des Rotors (12), wobei elektrische und/oder mechanische Bauteile der Sensorik (20) unmittelbar auf einer Leiterplatte (18) angeordnet sind, **dadurch gekennzeichnet, dass** der Rotor (12) ausschließlich an der Leiterplatte (18) drehbar gelagert ist.

2. Lenkwinkelsensor (10) nach Anspruch 1, **dadurch gekennzeichnet, dass** zur drehbaren Lagerung an der Leiterplatte (18) ein Lagerelement (26) angeordnet ist, das mit einem rotorseitigen Gegenlager zusammen wirkt.

3. Lenkwinkelsensor (10) nach Anspruch 2, **dadurch gekennzeichnet, dass** das Lagerelement (26) mit der Leiterplatte (18) form-, kraft- oder stoffschlüssig verbunden ist.

4. Lenkwinkelsensor (10) nach Anspruch 2 oder 3, **dadurch gekennzeichnet, dass** die Leiterplatte (18) Aussparungen (28) zur drehsicheren und/oder positionsgenauen Anordnung des Lagerelements (26) aufweist.

5. Lenkwinkelsensor (10) nach einem der Ansprüche 2 , 3 oder 4, **dadurch gekennzeichnet, dass** das Lagerelement (26) eine Lageraufnahme (38) zur drehbaren Lagerung eines mit dem Rotor (12) drehgekoppelten Rads (42) aufweist.

6. Lenkwinkelsensor (10) nach einem der Ansprüche 1 bis 4, **dadurch gekennzeichnet, dass** an der Leiterplatte (18) eine Lageraufnahme zur drehbaren Lagerung eines mit dem Rotor (12) drehgekoppelten Drehkörpers (42) vorgesehen ist.

7. Lenkwinkelsensor (10) nach einem der vorhergehenden Ansprüche, **dadurch gekennzeichnet, dass** die Leiterplatte (18) derart dimensioniert ist, dass sie Kräfte, die auf sie wirken, aufnehmen und ableiten kann.

8. Lenkwinkelsensor (10) nach einem der vorhergehenden Ansprüche, **dadurch gekennzeichnet, dass** die Sensorik wenigstens einen Optosensor (20) umfasst, wobei auf der Leiterplatte (18) Lichtsende- und/oder Empfängerelemente des Optosensor angeordnet sind.

9. Lenkwinkelsensor (10) nach Anspruch 6, **dadurch gekennzeichnet, dass** der Optosensor (20) einen Lichtleiter umfasst, der auf der Leiterplatte angeordnet ist.

10. Lenkwinkelsensor (10) nach Anspruch 7, **dadurch gekennzeichnet, dass** die Sensorik wenigstens einen Magnetfeldsensor umfasst, wobei auf der Leiterplatte wenigstens ein Hallelement des Magnetfeldsensor angeordnet ist.

11. Lenkwinkelsensor (10) nach einem der vorhergehenden Ansprüche, **dadurch gekennzeichnet, dass** die Sensorik (20) eine Auswerteeinheit umfasst, deren Bauteile wenigstens weitgehend unmittelbar auf der Leiterplatte (18) angeordnet sind.

12. Lenkwinkelsensor (10) nach einem der vorhergehenden Ansprüche, **dadurch gekennzeichnet, dass** auf der Leiterplatte (18) weitere elektrische und/oder mechanische Bauteile angeordnet sind.

13. Lenkwinkelsensor (10) nach einem der vorhergehenden Ansprüche, **dadurch gekennzeichnet, dass** die Leiterplatte von einem Gehäuse umgeben ist.

## Claims

1. A steering angle sensor (10) for determining the rotary position of a steering wheel of a vehicle, having a rotor, rotationally coupled directly or indirectly to a steering wheel, and having a sensor system (20) for detecting the rotary position of the rotor (12), wherein electrical and/or mechanical components of the sensor system (20) are disposed directly on the printed circuit board (18), **characterized in that** the rotor (12) is rotatably supported solely on the printed circuit board (18).

2. The steering angle sensor (10) as defined by claim 1, **characterized in that** a bearing element (26) for rotatable bearing is disposed on the printed circuit board (18) and cooperates with a counterpart bearing on the rotor.

3. The steering angle sensor (10) as defined by claim 2, **characterized in that** the bearing element (26) is joined to the printed circuit board (18) in form-, force-, or material-locking fashion.

4. The steering angle sensor (10) as defined by claim 2 or 3, **characterized in that** the printed circuit board (18) has recesses (28) for rotationally secure and/or positionally precise disposition of the bearing element (26).

5. The steering angle sensor (10) as defined by one of claims 2, 3 or 4, **characterized in that** the bearing element (26) has a bearing seat (38) for rotatable support of a wheel (42) rotationally coupled to the rotor (12).

6. The steering angle sensor (10) as defined by one of claims 1 through 4, **characterized in that** on the printed circuit board (18), a bearing seat is provided, for rotatable bearing of a rotary body (42) that is rotationally coupled to the rotor (12).

7. The steering angle sensor (10) as defined by one of the foregoing claims, **characterized in that** the printed circuit board (18) is dimensioned such that it can absorb and divert forces that act on it.

8. The steering angle sensor (10) as defined by one of the foregoing claims, **characterized in that** the sensor system includes at least one optical sensor (20), and light-emitting and/or light-receiving elements of the optical sensor are disposed on the printed circuit board (18).

9. The steering angle sensor (10) as defined by claim 6, **characterized in that** the optical sensor (20) includes an optical waveguide, which is disposed on the printed circuit board.

10. The steering angle sensor (10) as defined by claim 7, **characterized in that** the sensor system includes at least one magnetic field sensor, and at least one Hall element of the magnetic field sensor is disposed on the printed circuit board.

11. The steering angle sensor (10) as defined by one of the foregoing claims, **characterized in that** the sensor system (20) includes an evaluation unit, whose components are disposed at least largely directly on the printed circuit board (18).

12. The steering angle sensor (10) as defined by one of the foregoing claims, **characterized in that** further electrical and/or mechanical components are disposed on the printed circuit board (18).

13. The steering angle sensor (10) as defined by one of the foregoing claims, **characterized in that** the printed circuit board is surrounded by a housing.

## Revendications

1. Capteur d'angle de direction (10) pour déterminer la position de rotation du volant d'un véhicule, comprenant un rotor (12), directement ou indirectement accouplé en rotation à un volant, et un système de détection (20) pour détecter la position de rotation du rotor (12), des composants électriques et/ou mécaniques du système de détection (20) étant disposés directement sur un circuit imprimé (18), **caractérisé en ce que** le rotor (12) est supporté en rotation exclusivement sur le circuit imprimé (18).

2. Capteur d'angle de direction (10) selon la revendication 1, **caractérisé en ce que**, pour le supportage en rotation, un élément de palier (26) qui coopère avec un palier correspondant côté rotor est disposé sur le circuit imprimé (18).

3. Capteur d'angle de direction (10) selon la revendication 2, **caractérisé en ce que** l'élément de palier (26) est relié au circuit imprimé (18) par une liaison mécanique, une liaison par friction ou une liaison par la matière.

4. Capteur d'angle de direction (10) selon la revendication 2 ou la revendication 3, **caractérisé en ce que** le circuit imprimé (18) présente des encoches (28) permettant de disposer l'élément de palier (26) de manière bloquée en rotation et/ou positionnée avec précision.

5. Capteur d'angle de direction (10) selon l'une des revendications 2, 3 ou 4, **caractérisé en ce que** l'élément de palier (26) présente un logement de palier (38) pour supporter en rotation une roue (42) couplée en rotation au rotor (12).

6. Capteur d'angle de direction (10) selon l'une des revendications 1 à 4, **caractérisé en ce qu'**il est prévu sur le circuit imprimé (18) un logement de palier pour supporter en rotation un élément rotatif (42) couplé en rotation au rotor (12).

7. Capteur d'angle de direction (10) selon l'une des revendications précédentes, **caractérisé en ce que** le circuit imprimé (18) est dimensionné de façon à pouvoir absorber et évacuer les forces qui agissent sur lui.

8. Capteur d'angle de direction (10) selon l'une des revendications précédentes, **caractérisé en ce que** le système de détection comprend au moins un capteur optique (20), des éléments émetteurs et/ou récepteurs de lumière du capteur optique étant disposés sur le circuit imprimé (18).

9. Capteur d'angle de direction (10) selon la revendication 6, **caractérisé en ce que** le capteur optique (20) comprend un guide de lumière qui est disposé sur le circuit imprimé.

10. Capteur d'angle de direction (10) selon la revendication 7, **caractérisé en ce que** le système de détection comprend au moins un capteur de champ magnétique, au moins un élément à effet Hall du capteur de champ magnétique étant disposé sur le circuit imprimé.

11. Capteur d'angle de direction (10) selon l'une des revendications précédentes, **caractérisé en ce que** le système de détection (20) comprend un module d'évaluation dont les composants sont disposés au moins en majorité directement sur le circuit imprimé (18).

12. Capteur d'angle de direction (10) selon l'une des revendications précédentes, **caractérisé en ce que** d'autres composants électriques et/ou mécaniques sont disposés sur le circuit imprimé (18).

13. Capteur d'angle de direction (10) selon l'une des revendications précédentes, **caractérisé en ce que** le circuit imprimé est entouré par un boîtier.
